# EUROPÄISCHE PATENTSCHRIFT

(11) **EP 0 934 988 B1**
(45) Veröffentlichungstag und Bekanntmachung des Hinweises auf die Patenterteilung: **12.02.2003**
(21) Anmeldenummer: 98124384.3
(22) Anmeldetag: 21.12.1998
(51) Int. Cl.: C09D 167/00

(54) **Beschichtungen auf Basis thermoplastischer Polyester unter Zusatz eines ungesättigten Polyesters als Haftungsverbesserer**
Coating compositions based on thermoplastic polyester with the addition of an unsaturated polyester as adhesion promoter
Compositions de revêtement à base de polyester thermoplastique avec addition d'un polyester insaturé comme promoteur d'adhésion

(30) Priorität: 07.02.1998 DE 19805008
(43) Veröffentlichungstag der Anmeldung: 11.08.1999
(73) Patentinhaber: Degussa AG, 40474 Düsseldorf (DE)
(72) Erfinder: Zagefka, Hans-Dieter Dr., 45721 Haltern (DE); Spittka, Rainer, 46562 Voerde (DE); Hoppe, Dirk Dr., 48301 Nottuln (DE)

(56) Entgegenhaltungen:
- EP-A- 0 401 892
- US-A- 5 531 924

## Beschreibung

Gegenstand der Erfindung ist ein Epoxidharz-freies Beschichtungssystem auf Basis von thermoplastischen Polyestern in welches ein spezielles Zusatzharz als haftungsverbessernder Anteil eingearbeitet wird.

Auf Basis thermoplastischer Polyester werden seit geraumer Zeit Beschichtungsmaterialien für die verschiedensten Einsatzzwecke hergestellt und vermarktet. Üblicherweise werden hierzu auf Compoundierextrudern oder Knetern die für den vorgesehenen Anwendungszweck erforderlichen Zuschlagstoffe, wie Farbpigmente, Füllstoffe, Stabilisatoren, Verlaufmittel, Glanzmittel und/oder sonstige Zusatz- und Hilfsstoffe, in den Polyester eingearbeitet. Der Compound kann dann als Lösung, Folie, Schmelze, Pulver oder in sonstiger Form in dem vorgesehenen Einsatzbereich appliziert werden.

In der Praxis hat sich besonders die Pulverbeschichtung von Metallen nach dem Wirbelsinter- oder Elektrostatik-Verfahren bewährt. Beim Wirbelsinterverfahren werden heiße Metallteile durch Eintauchen in eine durch Luft fluidisierte Wirbelschicht des pulverförmigen Beschichtungsmaterials beschichtet. Hierbei schmilzt der Thermoplast auf der Oberfläche auf und bildet nach Erkalten einen schützenden Überzug. Bei der elektrostatischen Beschichtung wird Pulver mittels Druckluft auf das Metallteil gesprüht, wo es durch Anlegen einer Gleichstrom-Hochspannung haften bleibt. Anschließend erhält man durch Aufschmelzen (z. B. in einem Ofen oder über einer Gasflamme) ebenfalls einen Überzug. Das Beschichtungsmaterial kann auch auf andere Art, z. B. als Schmelze oder Folie, eingesetzt werden.

Obwohl die Herstellung von thermoplastischen Beschichtungspulvern wegen der Kaltvermahlung mit Flüssigstickstoff relativ aufwendig ist, konnte der Marktanteil gegen die Konkurrenz von Naßlacken und reaktiven Systemen gehalten und sogar vergrößert werden. Hier sind umwelttechnologische Aspekte entscheidend, da Beschichtungspulver gänzlich ohne Lösemittel auskommen. Weiterhin haben rein thermoplastische Beschichtungsmaterialien im Vergleich zu reaktiven Systemen verarbeitungstechnische Vorteile, da sie lediglich durch Wärmezufuhr aufgeschmolzen werden und durch Abkühlung härten. Hierdurch bedingt eignen sie sich auch fiir extrem schnelle Beschichtungsanlagen mit nachgeschalteter Weiterverarbeitung, für die reaktive Systeme in der Regel zu langsam sind. Reaktive Systeme erfordern naturgemäß chemisch reaktionsfreudige Komponenten und Härter, die oftmals toxikologisch bedenklich sind. Außerdem verbleibt nach der Reaktion ein Anteil Restmonomer in der Beschichtung.

Dies sind auch die Gründe, warum beim Nahtschutz von geschweißten Konservendosen bevorzugt thermoplastische Systeme eingesetzt werden. In der Konserve wird die Dosennaht durch thermoplastische Polyester zuverlässig gegen jeglichen Inhaltsstoff geschützt und damit der Inhalt unverändert bewahrt.

Die notwendigen lacktechnischen Eigenschaften wie z. B. Haftung, Elastizität und Sterilisierbarkeit der Beschichtung werden nicht durch den verwendeten thermoplastischen Polyester allein bewerkstelligt. Vielmehr hat man erst durch die Zumischung geeigneter Additive deutliche Verbesserungen erzielt. Durch die Einwirkung entsprechender Rezepturen hat man die Eigenschaften so weit optimiert, daß heute Beschichtungen aus thermoplastischen Polyestern sehr gute Gebrauchseigenschaften erreicht haben.

Stand der Technik ist es für die Haftverbesserung Epoxidharze als Zusatz in die thermoplastischen Polyester einzuarbeiten. Das Epoxidharz wird hierbei nicht wie sonst üblich chemisch vernetzt, sondern lediglich mit dem Polyester vermischt, da üblicherweise eingesetzte Polyester keine nennenswerten reaktiven Gruppen besitzen. Die Wirksamkeit des Epoxidharz-Zusatzes im Hinblick auf die lacktechnischen Eigenschaften ist ausgezeichnet und somit können sämtliche Anforderungen an das Beschichtungssystem voll erfüllt werden.

Soweit das Beschichtungssystem im Bereich Lebensmittelverpackung eingesetzt wird, müssen einschlägige Regularien erfüllt werden, wie FDA 175.300 (USA), Richtlinie 90/128 (EU), usw. Gerade hier haben thermoplastische Systeme, wie schon ausgeführt. gegenüber anderen Systemen entscheidende Vorteile.

In jüngster Vergangenheit sind Epoxidharze, die als Beschichtungsmaterial im Bereich Lebensmittelverpackung eingesetzt werden, in der Öffentlichkeit in die Kritik geraten. Spuren von Bisphenol-A-diglycidether (BADGE) werden aus Epoxidharzlacken aus Konservendoseninnenbeschichtungen herausgelöst und mit dem Nahrungsmittel in den menschlichen Organismus aufgenommen. In ölhaltigen Fischkonserven wurden sogar unzulässig hohe BADGE-Konzentrationen gemessen, die aus der Innenbeschichtung herausgelöst wurden. BADGE ist nun in Verdacht geraten, nach Aufnahme in den menschlichen Organismus krebserregende und oestrogene Effekte hervorgerufen zu haben. Dies führte dazu, daß der wissenschaftliche Lebensmittelausschuß (SCF) der Europäischen Union (EU) im Juni 1996 eine toxikologische Neubewertung von BADGE vorgenommen hat. Demnach gibt es zwar noch keine Anhaltspunkte für eine krebserregende Wirkung, jedoch fordert das Bundesinstitut für gesundheitlichen Verbraucherschutz und Veterinärmedizin (BgVV) in einer Pressemitteilung vom November 1996 technologische Maßnahmen zur Minimierung der Kontamination von Lebensmitteln. BADGE-Gehalte von mehr als 1 mg/kg werden demnach als gesundheitlich bedenklich eingestuft.

Übliche thermoplastische Beschichtungssysteme enthalten in der Rezeptur einen geringen Prozentsatz Epoxidharz, der natürlich ebenfalls einen gewissen Anteil Restmonomer (BADGE) enthält. Somit ist das im Grunde ökologisch und toxikologisch einwandfreie Beschichtungssystem thermoplastische Polyester doch noch über den Epoxidharzzusatz in die Kritik geraten.

Damit stellte sich die Aufgabe, einen Zusatz für ein Beschichtungssystem zu finden, der toxikologisch völlig unbedenklich ist und mindestens die gleichguten Eigenschaften des Epoxidharzzusatzes gewährleistet.

Überraschenderweise wurde gefunden, daß gemäß den Ansprüchen, durch Zusatz von speziellen ungesättigten Polyesterharzen zu den beschriebenen Copolyestern das Eigenschaftsprofil der durch Schmelzauftrag hergestellten Beschichtungen gegenüber den reinen Copolyestern so verbessert werden kann, daß sie die Sterilisationsprüfung bestehen und auch für Lebensmittelverpackungen geeignet sind.

Derartige ungesättigte Polyester werden üblicherweise in einem zur Copolymerisation befähigten Monomer (meist Styrol) oder einem Reaktiwerdünner gelöst (UP-Harze) und anschließend zur Aushärtung radikalisch polymerisiert. Hauptanwendungsgebiete von UP-Harzen sind die Bauindustrie (unverstärkte oder mit Glasfasern verstärkte Erzeugnisse), der Automobilbereich (Reparaturspachtel) oder z. B. die industrielle Holz- und Möbelbeschichtung.

Die Zusatzharze werden durch Polykondensation von Diolen und Dicarbonsäuren hergestellt.

Als ungesättigte Dicarbonsäure wird in den erfindungsgemäßen ungesättigten Polyesterharzen überwiegend Maleinsäure (als Anhydrid) oder Fumarsäure eingesetzt. Es können aber auch Mesacon-, Citracon-, Itaconsäure und/oder Tetrahydrophthalsäure eingesetzt werden. Neben den ungesättigten Säuren werden aber auch zur Steuerung der Eigenschaften des ungesättigten Polyesterharzes Phthalsäure, Isophthalsäure, Terephthalsäure, Adipinsäure, Bernsteinsäure oder Sebacinsäure eingesetzt.

Als Diole kommen Ethylenglykol, 1,2- oder 1,3-Propandiol, Diethylen-, Dipropylen-, Triethylen-, Tetraethylenglykol, 1,2- und 1,4-Butandiol sowie insbesondere Dicidol zum Einsatz [Herstellung und Eigenschaften der ungesättigten Polyesterharze siehe auch H. Krämer, Ullmann's Encyclopedia of Industrial Chemistry Vol A 21, S. 217 ff. (1992)].

Bevorzugt wird das Zusatzharz durch Kondensation von Di und/oder Triolen mit Dicarbonsäuren erhalten, wobei ein oder zwei Monomere ungesättigt sind. Die erfindungsgemäßen ungesättigten Polyester haben folgende Eigenschaften:

| | |
|---|---|
| Schmelzpunkt | 50 bis 120 °C |
| Säurezahl | 8 bis 50 mg KOH/g |
| Hydroxylzahl | 10 bis 60 mg KOH/g |

Der ungesättigte Polyester wird in Mengen von 0,1 bis 15 Teilen auf 99,9 bis 85 Teile Basispolyester, vorzugsweise 0,5 bis 10 Teilen auf 99,5 bis 90 Teile Basispolyester, besonders bevorzugt 1 bis 5 Teilen auf 99 bis 95 Teile Basispolyester, eingesetzt.

Zur Herstellung der Beschichtungsmasse kann das Zusatzharz mit dem Copolyester und den weiteren praxisüblichen Zusatzstoffen (wie z. B. Farbpigmente, Füllstoffe, Stabilisatoren, Verlaufmittel, Glanzmittel und/oder sonstige Zusatz- und Hilfsstoffe) im Extruder zu einem Compound verarbeitet werden.

Das Zusatzharz kann aber auch am Ende der Kondensation des Copolyesters dem schmelzflüssigen Copolyester zugesetzt, in diesem homogenisiert und als homogene Mischung mit praxisüblichen Verfahren ausgetragen werden. Hierbei ist darauf zu achten, daß
1) vor Zusatz des Zusatzharzes die Polyesterschmelze abgekühlt wird und
2) die Verweilzeit der Polymermischung im Reaktor möglichst kurz ist,
damit ein unerwünschter Molmassenabbau bzw. Umesterung des Polyesters vermieden wird.

Als thermoplastischer Basispolyester in den erfindungsgemäßen Beschichtungsmaterialien wird ein teilkristalliner Polyester mit einer Viskositätszahl > 60 ml/g, vorzugsweise > 70 ml/g, einer Glastemperatur zwischen 0 und 50 °C, vorzugsweise 10 und 40 °C, und einem Schmelzbereich zwischen 150 und 200 °C, vorzugsweise zwischen 160 und 180 °C, eingesetzt.

Der Basispolyester hat als Säurekomponente mindestens eine aromatische Dicarbonsäure wie z. B. Terephthalsäure, sowie mindestens eine aliphatische Dicarbonsäure mit 2 bis 36 Kohlenstoffatomen oder deren esterbildenden Derivate. Auf der Diolseite enthält er vorzugsweise 1,4-Butandiol und fakultativ ein oder mehrere aliphatische Diole mit 2 bis 36 Kohlenstoffatomen.

Das erfindungsgemäße Beschichtungssystem kann als zusätzliche Komponente einen weiteren Polyester enthalten. Dieser Polyester ist teilkristallin und enthält als Säurekomponente mindestens eine aromatische Dicarbonsäure, wie z. B. Terephthalsäure sowie mindestens eine aliphatische Dicarbonsäure mit 2 bis 36 Kohlenstoffatomen oder deren esterbildenden Derivate. Bezüglich der Diolkomponente enthält der Polyester 1,4-Butandiol und fakultativ ein oder mehrere aliphatische Diole mit 2 bis 36 Kohlenstoffatomen. Der Polyester wird in Mengen von 2 bis 60 Massen-%, vorzugsweise 5 bis 50 Massen-% und besonders bevorzugt 10 bis 40 Massen-%, bezogen auf den gesamten Compound, eingesetzt. Er hat eine Viskositätszahl >60 ml/g, vorzugsweise >70 ml/g, eine Glastemperatur zwischen -50 und 0 °C, vorzugsweise -40 bis -10 °C und einen Schmelzbereich zwischen 140 bis 200 °C, vorzugsweise 145 bis 170 °C. Durch diesen Polyester bekommt der Compound flexible Eigenschaften und eignet sich besonders zur Beschichtung von Teilen, die nachträglich mechanisch verformt werden.

Die erfindungsgemäßen Beschichtungsmaterialien können für die verschiedensten Einsatzzwecke verwendet werden. Ein besonderes Einsatzgebiet ist die Beschichtung im Bereich der Lebensmittelverpackung. Hierzu werden die für den vorgesehenen Anwendungszweck erforderlichen Zuschlagstoffe, wie Farbpigmente, Füllstoffe, Stabilisatoren, Verlaufmittel, Glanzmittel und/oder sonstige Zusatz- und Hilfsstoffe, in den Polyester eingearbeitet. Der Compound kann dann als Lösung, Folie, Schmelze, Pulver oder in sonstiger Form in dem vorgesehenen Einsatzbereich appliziert werden.

### Vergleichsbeispiel 1: (Thermoplastischer Polyester ohne Zusatz):

Ein thermoplastischer Polyester (nach DP 23 46 559) wird unter Zugabe 20 % Titanoxid und 0,5 % eines Verlaufsmittels zu einem Compound verarbeitet. Anschließend wird mittels Kaltvermahlung und Siebung ein Pulver < 85 µm hergestellt. Das Pulver wird mittels Elektrostatik-Pistole auf ca. 0,4 mm starke Bleche aufgesprüht und 5 Minuten bei 200 °C in einem Ofen aufgeschmolzen.

Die ca. 60 µm starke Beschichtung hat folgende Eigenschaften:
Haftung: Gitterschnitt GT 0,
Elastizität: Erichsentiefung > 10 mm,
Haftung nach Heißwassertest: Gitterschnitt GT 0,
Haftung nach Essigsäuresterilisation (3 %): Gitterschnitt GT 4,
Haftung nach Milchsäuresterilisation (2 %): Gitterschnitt GT 4.

Endbeurteilung: Das Beschichtungssystem verliert seine Haftung nach einem Säureangriff und kann in der Praxis nur begrenzt eingesetzt werden.

### Vereleichsbeispiel 2: (Thermoplastischer Polyester mit Epoxidharzzusatz):

Beschichtungspulver (hergestellt wie in Vergleichsbeispiel 1) aber mit Zusatz von 5 % Epoxidharzzusatz. Analog Beispiel 1 wurde das Pulver mittels Elektrostatik-Pistole auf ca. 0,4 mm starke Bleche aufgesprüht und 5 Minuten bei 200 °C in einem Ofen aufgeschmolzen.

Die ca. 60 µm starke Beschichtung hat folgende Eigenschaften:
Haftung: Gitterschnitt GT 0,
Elastizität: Erichsentiefung > 10 mm,
Haftung nach Heißwassertest: Gitterschnitt GT 0,
Haftung nach Essigsäuresterilisation (3 %): Gitterschnitt GT 0,
Haftung nach Milchsäuresterilisation (2 %): Gitterschnitt GT 0.

### Beispiele:

In den Beispielen wird ein thermoplastischer Polyester (nach DB 23 46 559) eingesetzt.

Als Zusatzharz 1 wird ein handelsübliches Polyesterharz (Hüls AG, Haftharz LTH) mit folgenden Kenndaten eingesetzt.

| | |
|---|---|
| Schmelzpunkt (DIN 53 181) | 90 bis 102 °C |
| Säurezahl (DIN 53 402/ISO 2114) | 12 bis 20 mg KOH/g |
| Hydroxylzahl (DIN/ISO 4629) | ca. 25 mg KOH/g |

Zusatzharz 2 wird auf Basis von Fumarsäure, Iso-Phthalsäure (1 : 1) und 1,2-Propanglykol zu einem Polyester mit folgenden Kenndaten kondensiert:

| | |
|---|---|
| Schmelzpunkt (DIN 53 181) | 78 °C |
| Säurezahl (DIN 53 402/ISO 2124) | 29 mg KOH/g |
| Hydroxylzahl (DIN/ISO 4629) | 31 mg KOH/g |

Mit den Zusatzharzen 1 und 2 werden Beschichtungsmassen hergestellt (Tab. 1)

**Tabelle 1:**

| Beschichtungsmassen | | |
|---|---|---|
| | **Bestandteil in Masse %** | |
| | **Rezeptur 1** | **Rezeptur 2** |
| Copolyester 1 | 73 | 73 |
| Zusatzharz 1 | 3 | 0 |
| Zusatzharz 2 | 0 | 3 |
| TiO₂RTG-30 | 20 | 20 |
| Micro Mica W1 | 3,5 | 3,5 |
| Perenol F30 mod | 0,50 | 0,50 |
| **Summe** | 100 | 100 |

Mit den jeweiligen Beschichtungsmassen wurden Beschichtungen aus der Schmelze hergestellt. Die Ergebnisse der anwendungstechnische Prüfung sind in Tabelle 2 zusammengefaßt:

**Tabelle 2**

| Prüfung der Beschichtungen | | |
|---|---|---|
| **Eigenschaft** | **Rezeptur 1** | **Rezeptur 2** |
| Haftung | GT0 | GT0 |
| Elastizität Erichsenprüfung | > 10 mm | > 10 mm |
| Haftung nach: | | |
| Essigsäuresterilisation (3 %) | GT0 | GT0 |
| Milchsäuresterilisation (2 %) | GT0 | GT0 |

Endbeurteilung: Die Beschichtungssysteme werden durch Zusatz der ungesättigten Polyesterharze sterilisationsfest, die Haftung ist auch nach einem Säureangriff sehr gut, das System kann für alle Anwendungsgebiete eingesetzt werden.

In Vergleichsbeispiel 1 wird deutlich, daß auch ein rezepturoptimierter thermoplastischer Polyester nicht alle Anforderungen an ein Beschichtungssystem erfüllen kann.

Vergleichsbeispiel 2 zeigt das technisch derzeit genutzte System, allerdings enthält diese Formulierung BADGE.

In den Beispielen wird die Anwendung der erfindungsgemäßen, haftungsverbessernden Polyester gezeigt. Sie bieten einen völlig gleichwertigen Ersatz von Epoxidharz bei gleichguten Gebrauchseigenschaften.

## Patentansprüche

1. Beschichtungssystem auf Basis von thermoplastischen Polyestem, Farbpigmenten, Füllstoffen, Verlaufmitteln und weiteren üblichen Hilfsstoffen,
**dadurch gekennzeichnet,**
**dass** das Beschichtungssystem einen Basispolyester bestehend aus
A) mindestens einer aromatischen mehrbasigen Dicarbonsäure und mindestens einer aliphatischen Dicarbonsäure mit 2 bis 36 Kohlenstoffatomen oder deren esterbildenden Derivate und
B) 1,4-Butandiol oder 1,4-Butandiol mit einem oder mehreren aliphatischen Diolen mit 2 bis 36 Kohlenstoffatomen,
und
C) ein Zusatzharz, erhalten durch Kondensation von Di- und/oder Triolen mit Dicarbonsäuren, wobei ein oder zwei Monomere ungesättigt sind, wobei das Zusatzharz einen Schmelzpunkt von 5 bis 120 °C, eine Säurezahl von 8 bis 50 mg KOH/g und eine Hydroxylzahl von 10 bis 60 mg KOH/G aufweist, in Anteilen von 0,1 bis 15 Teile Zusatzharz auf 99,9 bis 85 Teile Basispolyester als eigenschaftsverbessernden Zusatz enthält.

2. Beschichtungssystem nach Anspruch 1,
**dadurch gekennzeichnet,**
**dass** 0,5 bis 10 Teile Zusatzharz auf 99,5 bis 90 Teile Copolyester eingesetzt werden.

3. Beschichtungssystem nach Anspruch 1,
**dadurch gekennzeichnet,**
**dass** 1 bis 5 Teile Zusatzharz auf 99 bis 95 Teile Copolyester eingesetzt werden.

4. Beschichtungssystem nach einem der vorherigen Ansprüche,
**dadurch gekennzeichnet,**
**dass** als Diol Dicidol eingesetzt wird.

5. Beschichtungssystem nach einem der vorherigen Ansprüche,
**dadurch gekennzeichnet,**
**dass** als Säurekomponente Fumarsäure eingesetzt wird.

6. Beschichtungssystem nach einem der vorherigen Ansprüche,
**dadurch gekennzeichnet,**
**dass** der Basispolyester eine Glastemperatur zwischen 0 und 50 °C, einen Schmelzbereich zwischen 150 und 200 °C und eine Viskosität > 60 ml/g aufweist.

7. Beschichtungssystem nach einem der vorherigen Ansprüche,
**dadurch gekennzeichnet,**
**dass** der Basispolyester eine Glastemperatur zwischen 10 und 40 °C, einen Schmelzbereich zwischen 160 und 180 °C und eine Viskosität > 70 ml/g aufweist.

8. Beschichtungssystem nach einem der vorherigen Ansprüche,
**dadurch gekennzeichnet,**
**dass** das Beschichtungssystem einen weiteren Polyester bestehend aus
A) mindestens einer aromatischen Dicarbonsäure sowie mindestens einer aliphatischen Dicarbonsäure mit 2 bis 36 Kohlenstoffatomen oder deren esterbildenden Derivaten
und
B) 1,4-Butandiol oder 1,4-Butandiol mit einem oder mehreren aliphatischen Diolen mit 2 bis 36 Kohlenstoffatomen
mit einer Glastemperatur zwischen -50 bis 0 °C, einem Schmelzbereich zwischen 140 bis 200 °C und einer Viskositätszahl > 60 ml/g in einer Menge von 2 bis 60 Massen-%, bezogen auf den gesamten Compound, als flexibilisierenden Zusatz enthält.

9. Verfahren zur Herstellung eines Beschichtungssystems nach einem der vorherigen Ansprüche,
**dadurch gekennzeichnet,**
**dass** das Zusatzharz mit einem Extruder mit den einzusetzenden Copolyester und allen Zuschlagstoffen, wie z. B. Füller, Pigment, zu einem Compound verarbeitet wird.

10. Verfahren zur Herstellung eines Beschichtungssystems nach einem der vorherigen Ansprüche,
**dadurch gekennzeichnet,**
**dass** bei zum Ende der Herstellung des Copolyesters das Zusatzharz im erforderlichen Massenverhältnis dem schmelzflüssigen Copolyester zugesetzt, in diesem homogenisiert, und zusammen als homogene Mischung ausgetragen wird.

11. Verwendung eines Beschichtungssystems nach einem der vorherigen Ansprüche zum Beschichten von Lebensmittelverpackungen.

## Claims

1. A coating system based on thermoplastic polyesters, colour pigments, fillers, levelling agents and further customary auxiliary substances, **characterized in that** the coating system comprises a base polyester comprising
a) at least one aromatic polybasic dicarboxylic acid and at least one aliphatic dicarboxylic acid of 2 to 36 carbon atoms or their ester-forming derivatives, and
b) 1,4-butanediol, or 1,4-butanediol with one or more aliphatic diols having 2 to 36 carbon a toms,
c) an additive resin obtained by condensing a di- and/or triol with a dicarboxylic acid, with one or two monomers being unsaturated, the additive resin having a melting point of from 5 to 120°C, an acid number of from 8 to 50 mg KOH/g and a hydroxyl number of from 10 to 60 mg KOH/g, in a proportion of from 0.1 to 15 parts of additive resin relative to 99.9 to 85 parts of base polyester, as property-improving additive.

2. A coating system according to claim 1, **characterized in that** from 0.5 to 10 parts of additive resin are employed relative to 99.5 to 90 parts of copolyester.

3. A coating system according to claim 1, **charactized in that** from 1 to 5 parts of additive resin are employed relative to 99 to 95 parts of copolyester.

4. A coating system according to any one of the preceding claims, **characterized in that** Dicidol is employed as diol.

5. A coating system according to any one of the preceding claims, **characterised in that** fumaric acid is employed as acid component.

6. A coating system according to any one of the preceding claims, **characterized in that** the base polyester has a glass transition temperature of from 0 to 50°C, a melting range of from 150 to 200°C and a viscosity > 60 ml/g.

7. A coating system according to any one of the preceding claims, **characterized in that** the base polyester has a glass transition temperature of from 10 to 40°C, a melting range of from 160 to 180°C and a viscosity > 70 ml/g.

8. A coating system according to any one of the preceding claims, **characterised in that** the coating system comprises a further polyester comprising
a) at least one aromatic dicarboxylic acid and at least one aliphatic dicarboxylic acid of 2 to 36 carbon atoms, or their ester-forming derivatives, and
b) 1,4-butanediol, or 1,4-butanediol with one or more aliphatic diols having 2 to 36 carbon atoms,
having a glass transition temperature of from -50 to 0°C, a melting range of from 140 to 200°C and a viscosity number > 60 ml/g in an amount of from 2 to 60% by mass, based on the overall compound, as a flexibilizing additive.

9. A process for preparing a coating system according to any one of the preceding claims, **characterized in that** the additive resin is processed in an extruder with the copolyester to be employed and with all adjuvants, such as filler, pigment, for example, to give a compound.

10. A process for preparing a coating system according to any one of the preceding claims, **charcterized in that** at the end of the preparation of the copolyester the additive resin is added in the required proportion to the liquid copolyester melt, homogenized in this melt, and the two components are discharged together as a homogeneous mixture.

11. The use of a coating system according to any of the preceding claims for coating food packaging.

## Revendications

1. Système de revêtement à base de polyesters thermoplastiques, de pigments colorés, de substances de remplissage, de produits nivelants et d'autres adjuvants usuels,
**caractérisé en ce que**
le système de revêtement contient un polyester de base consistant en :
A) au moins un acide dicarboxylique aromatique polybasique et au moins un acide di-carboxylique aliphatique ayant de 2 à 36 atomes de carbone ou leurs dérivés qui forment des esters, et
B) du 1,4-butane diol ou du 1,4 butane diol avec un ou plusieurs diols aliphatiques ayant de 2 à 36 atomes de carbone,
et
C) une résine d'addition obtenue par condensation de di- et/ou de triols avec des acides dicarboxyliques parmi lesquels un ou deux monomères sont non-saturés, dans laquelle la résine d'addition possède un point de fusion de 5 à 120°C, un indice d'acidité de 8 à 50 mg KOH/g, et un indice d'hydroxyle de 10 à 60 mg KOH/g et est présente dans des proportions de 0.1 à 15 parties de résine d'addition pour 99.9 à 85 parties de polyester de base en tant qu'additif qui améliore les propriétés.

2. Système de revêtement selon la revendication 1,
**caractérisé en ce que**
de 0,5 à 10 parties de résine d'addition pour 99,5 à 90 parties de co-polyester, sont mis en oeuvre.

3. Système de revêtement selon la revendication 1,
**caractérisé en ce que**
de 1 à 5 parties de résine d'addition pour de 99 à 95 parties de co-polyester sont mises en oeuvre.

4. Système de revêtement selon l'une des revendications précédentes,
**caractérisé en ce que**
comme diol on met en oeuvre du dicidol.

5. Système de revêtement selon l'une des revendications précédentes,
**caractérisé en ce que**
comme composant acide on met en oeuvre de l'acide fumarique.

6. Système de revêtement selon l'une des revendications précédentes,
**caractérisé en ce que**
le polyester de base possède une température vitreuse comprise entre 0 et 50°C, une zone de fusion comprise entre 150 à 200°C et une viscosité > 60 ml/g.

7. Système de revêtement selon l'une des revendications précédentes,
**caractérisé en ce que**
le polyester de base possède une température vitreuse comprise entre 10 à 40°C, une zone de fusion comprise entre 160 à 180°C et une viscosité > 70 ml/g.

8. Système de revêtement selon l'une des revendications précédentes,
**caractérisé en ce que**
le système de revêtement contient un autre polyester qui consiste en
A) au moins un acide dicarbonylique aromatique ainsi qu'au moins un acide dicarboxylique aliphatique ayant de 2 à 36 atomes de carbone ou ses dérivés qui forment un ester,
et
B) du 1,4-butane diol ou du 1,4-butane diol avec un ou plusieurs diols aliphatiques ayant de 2 à 36 atomes de carbone,
ayant une température vitreuse comprise entre -50 et 0°C, une zone de fusion comprise entre 140 et 200°C et un indice de viscosité > 60 ml/g, en une quantité allant de 2 à 60% en masse rapporté à la totalité du mélange (Compound) en tant qu'additif qui rend flexible.

9. Procédé de production d'un système de revêtement selon l'une des revendications précédentes,
**caractérisé en ce que**
la résine d'addition est transformée avec une extrudeuse, avec le co-polyester à mettre en oeuvre et toutes les substances d'addition comme par exemple la substance de remplissage, le pigment, en un mélange.

10. Procédé de production d'un système de revêtement selon l'une des revendications précédentes,
**caractérisé en ce que**
lors de la production finale du co-polyester, la résine d'addition est ajoutée dans un rapport en masse nécessaire au co-polyester liquide de fusion, est homogénéisé dans celui-ci et est évacué conjointement sous forme de mélange homogène.

11. Utilisation d'un système de revêtement selon l'une des revendications précédentes en vue du revêtement d'emballages pour produits alimentaires.
